# EUROPEAN PATENT APPLICATION

(11) **EP 4 838 841 A1**
(43) Date of publication of application: **11.11.2026**
(21) Application number: 24919772.4
(22) Date of filing: 29.09.2024
(51) Int. Cl.: H04L 12/40

(54) **DEVICE MANAGEMENT METHOD AND APPARATUS BASED ON BUS TECHNOLOGY, AND SYSTEM**

(30) Priority: 26.01.2024 CN 202410117987; 03.06.2024 CN 202410711358
(71) Applicant: Huawei Cloud Computing Technologies Co., Ltd., Gui'an New District, Guizhou 550025 (CN)
(72) Inventor: CAO, Jincan, Guiyang, Guizhou 550025 (CN); PENG, Lin, Guiyang, Guizhou 550025 (CN); HUANG, Fuguang, Guiyang, Guizhou 550025 (CN); YANG, Dehua, Guiyang, Guizhou 550025 (CN); HU, Tanyong, Guiyang, Guizhou 550025 (CN)
(74) Representative: Goddar, Heinz J.
(86) International application number: PCT/CN2024/122226
(87) International publication number: WO 2025/156692

(57) **Abstract**

Embodiments of this application provide a bus technology-based device management method, an apparatus, and a system. After being powered on, a bus device may actively send device information of the bus device to a bus controller without being initiated by the bus controller. After receiving the device information of the bus device, the bus controller allocates address space of a bus to the bus device based on the device information of the bus device. This helps reduce latency in discovering the bus device by the bus controller, and improve efficiency of managing a bus network by the bus controller.

## Description

This application claims priorities to Chinese Patent Application No. 202410117987.9, filed with the China National Intellectual Property Administration on January 26, 2024 and entitled "BUS DEVICE MANAGEMENT METHOD AND BUS CONTROLLER", and to Chinese Patent Application No. 202410711358.9, filed with the China National Intellectual Property Administration on June 3, 2024 and entitled "BUS TECHNOLOGY-BASED DEVICE MANAGEMENT METHOD, APPARATUS, AND SYSTEM", both of which are incorporated herein by reference in their entireties.

### TECHNICAL FIELD

This application relates to the field of computer technologies, and in particular, to a bus technology-based device management method, an apparatus, and a system.

### BACKGROUND

Compared with the traditional Ethernet, bus networks have advantages such as lower latency and higher bandwidth. With the rapid development of information technologies, data-intensive and computing-intensive application scenarios such as public cloud, artificial intelligence (artificial intelligence, AI), and autonomous driving computing become increasingly popular, and an entire computing system will become increasingly complex. Accordingly, requirements for interconnection buses are inevitably higher, and it is more important to reduce latency of the bus networks and improve management efficiency of the bus networks.

### SUMMARY

In an existing management mechanism of a bus network, a bus controller discovers and registers with bus devices through enumeration scanning. As a scale of the bus network continuously increases, the bus controller needs to scan more and more bus devices. As a result, latency in discovering the bus devices by the bus controller continuously increases, and a load of the bus controller continuously increases. This increases a probability of a fault occurring on the bus controller and reduces reliability of the bus network.

In view of this, this application provides a bus technology-based device management method, an apparatus, and a system. After being powered on, a bus device may actively send device information of the bus device to a bus controller without waiting to receive an enumeration packet sent by the bus controller. After receiving the device information of the bus device, the bus controller allocates address space of a bus to the bus device based on the device information of the bus device. In this way, not only latency in discovering the bus device by the bus controller is reduced, and efficiency of managing the bus network by the bus controller is improved, but also a load of the bus controller is reduced, and a probability of a fault occurring in the bus controller is reduced, thereby improving reliability of the bus network.

According to a first aspect, this application provides a bus technology-based device management method. The method is performed by a bus controller in a bus network, and the bus network includes a plurality of bus devices interconnected through a bus. The bus controller may be a bus device, or some components (for example, a processor, a chip, or a chip system) of a bus device, or a logical module or software that implements all or some functions of a bus device. In the method, the bus controller receives device advertisement information. The device advertisement information includes device information of the first bus device, and the device information of the first bus device is actively sent by the first bus device to the bus controller after the first bus device is powered on. Then, the bus controller allocates address space of the bus to the first bus device based on the device information of the first bus device, and then sends configuration information to the first bus device. The configuration information includes address information for describing the address space.

Because the bus controller may allocate the address space to the first bus device based on the device information actively sent by the first bus device after the first bus device is powered on, this not only helps reduce latency in discovering the bus device by the bus controller, and improve efficiency of managing the bus network by the bus controller, but also helps reduce a load of the bus controller, and reduce a probability of a fault occurring on the bus controller, thereby improving reliability of the bus network.

Optionally, the first bus device actively sends the device information of the first bus device to the bus controller after being powered on. There is no limitation that the first bus device definitely does not receive information from the bus controller before sending the device information of the first bus device to the bus controller. Instead, the first bus device sends the device information of the first bus device to the bus controller without depending on receiving information (for example, an enumeration packet) from the bus controller. Even if the first bus device has not received any information from the bus controller after being powered on, the first bus device may still send the device information of the first bus device to the bus controller.

In a possible implementation of the first aspect, the device information of the first bus device is forwarded to the bus controller by one or more bus devices in the bus network after being sent from the first bus device. In other words, the first bus device is not directly connected to the bus controller. The bus controller may allocate the address space to the first bus device based on the device information actively sent by the indirectly connected first bus device. This helps reduce latency in discovering the first bus device by the bus controller by traversing the one or more bus devices, and improve efficiency of managing a large-scale bus network (for example, a bus network across compute devices) by the bus controller.

In a possible implementation of the first aspect, the plurality of bus devices are disposed in at least two computer devices.

In a possible implementation of the first aspect, the device advertisement information further includes path information, and the path information includes information indicating that the device information of the first bus device is forwarded by the one or more bus devices. The bus controller may further determine, based on the path information, a forwarding path of the device advertisement information between the first bus device and the bus controller. Determining the forwarding path between the first bus device and the bus controller by the bus controller helps improve the efficiency of managing the bus network by the bus controller. In addition, the bus controller may determine the forwarding path between the first bus device and the bus controller based on receiving the device information actively sent by the first bus device after the first bus device is powered on, which helps reduce latency in determining a topology position of the first bus device in the bus network by the bus controller. This not only helps improve the efficiency of managing the bus network by the bus controller, but also helps reduce the load of the bus controller, and reduce the probability of the fault occurring on the bus controller, thereby improving the reliability of the bus network.

An implementation in which the device advertisement information further includes the path information is not limited in this application. Optionally, after receiving the device information of the first bus device, the bus device having a forwarding function encapsulates the device information of the first bus device together with information for forwarding the device information of the first bus device, and then forwards encapsulated information.

In this application, there is no limitation that, after receiving the device information of the first bus device, all bus devices having a forwarding function encapsulate the device information of the first bus device together with information for forwarding the device information of the first bus device, and then forward encapsulated information. Optionally, after receiving the device information of the first bus device, a bus device connected to the first bus device in the bus network may encapsulate the device information of the first bus device together with information for forwarding the device information of the first bus device, and then forward encapsulated information.

In a possible implementation of the first aspect, when the device information of the first bus device is forwarded to the bus controller by using the plurality of bus devices in the bus network, there may be a plurality of forwarding paths between the bus controller and the first bus device. The bus controller may separately receive a plurality of pieces of device advertisement information that each includes the device information of the first bus device. The device information of the first bus device in the plurality of pieces of device advertisement information is forwarded to the bus controller through different forwarding paths in the plurality of forwarding paths. In addition, as described above, the device advertisement information further includes path information, and the path information includes information indicating that the device information of the first bus device in the device advertisement information is forwarded by the one or more bus devices. Then, the bus controller may determine a plurality of corresponding forwarding paths based on the path information in each of the plurality of pieces of device advertisement information.

An implementation in which the device information of the first bus device in the plurality of pieces of device advertisement information arrives at the bus controller through the plurality of forwarding paths is not limited in this application. Optionally, after receiving the device information of the first bus device, a bus device (for example, a bus switch) having a forwarding function in the bus network may forward the device information of the first bus device in a broadcast manner. Alternatively, after receiving the device information of the first bus device, a bus device (for example, a bus switch) having a forwarding function in the bus network may forward the device information of the first bus device to a peer bus device having a forwarding function and the bus controller, and may not forward the device information of the first bus device to a peer bus device that does not have a forwarding function and is not the bus controller. This helps improve security of the device information of the first bus device.

In this application, there is no limitation that all the bus devices having the forwarding function in the bus network forward the received device information of the first bus device in the broadcast manner. Optionally, after receiving the device information of the first bus device, the bus device connected to the first bus device in the bus network forwards the device information of the first bus device in the broadcast manner.

Optionally, a single forwarding path sequentially passes through one or more bus devices, and different forwarding paths pass through different bus devices, or pass through ports of different bus devices, or pass through different quantities of bus devices.

In a possible implementation of the first aspect, that the bus controller sends the configuration information to the first bus device may include: The bus controller determines a target forwarding path based on the plurality of forwarding paths that are between the first bus device and the bus controller and that are determined above, and sends the configuration information to the first bus device through the target forwarding path. Compared with sending the configuration information to the first bus device by the bus controller through the plurality of forwarding paths, this helps save transmission resources of the bus.

Optionally, that the bus controller sends the configuration information to the first bus device through the target forwarding path may mean that the bus controller sends the configuration information through a port in a plurality of ports of the bus controller that is located on the target forwarding path, or the configuration information carries information about the target forwarding path, to indicate a bus device other than the first bus device to forward, after receiving the configuration information, the configuration information based on the target forwarding path.

In a possible implementation of the first aspect, the bus controller may further send device information of the bus controller to at least one bus device connected to the bus controller. The device information of the bus controller indicates the at least one bus device to record information about a port for connecting to the bus controller. In this way, sending the device information of the bus controller by the bus controller helps the at least one bus device connected to the bus controller record the port connected to the bus controller, thereby improving a success rate of sending information to the bus controller by another bus device, and improving efficiency of managing the bus network by the bus controller.

In a possible implementation of the first aspect, the bus controller may further receive device information of a second bus device in the bus network. The device information of the second bus device is forwarded by at least one bus device based on the recorded information about the port connected to the bus controller. Similar to the foregoing descriptions, the device information of the second bus device may be actively sent by the second bus device to the bus controller after the second bus device is powered on. After receiving the device information of the second bus device, the at least one bus device forwards the device information based on the recorded information about the port connected to the bus controller. This helps improve a success rate of receiving the device information of the second bus device by the bus controller, and helps avoid a case in which the at least one bus device separately sends the device information of the second bus device to each port of the at least one bus device in the broadcast manner. In this way, in one aspect, a load of the at least one bus device is reduced, transmission resources of the bus are saved, and security of the second bus device is improved.

In a possible implementation of the first aspect, the bus controller may further receive status advertisement information of the first bus device. The status advertisement information of the first bus device indicates that the first bus device is to exit the bus network or is still connected to the bus network, and the status advertisement information of the first bus device is forwarded by the at least one bus device based on the recorded information about the port connected to the bus controller. Then, the bus controller may determine a connection status of the first bus device in the bus network based on the status advertisement information of the first bus device. This helps improve a success rate of receiving the status advertisement information by the bus controller, and improve efficiency of managing the bus network by the bus controller, and helps avoid a case in which the at least one bus device separately sends the status advertisement information to each port of the at least one bus device in the broadcast manner, reduce a load of the at least one bus device, and save transmission resources of the bus.

Optionally, the connection status of the first bus device in the bus network may be that the first bus device is to exit the bus network, or has exited the bus network, or is still connected to the bus network.

In a possible implementation of the first aspect, a device type of the bus device that forwards the device information of the first bus device in the bus network includes a bus switch. Optionally, a device type of the bus device that forwards the device information of the first bus device in the bus network may further include another type, for example, may further include a bus terminal that supports mapping storage space of the bus terminal to address space of the bus.

In a possible implementation of the first aspect, the device information of the first bus device includes an identifier of the first bus device, and the identifier of the first bus device includes at least one of a device type of the first bus device, a vendor identifier of the first bus device, and a device identifier of the first bus device.

In a possible implementation of the first aspect, the device information of the first bus device includes a size of address space required by the first bus device. In this way, the bus controller is enabled to allocate the address space to the first bus device based on the size of the address space required by the first bus device, thereby improving accuracy of allocating the address space by the bus controller to the first bus device. This not only helps avoid a configuration error caused by the address space allocated by the bus controller to the first bus device being greater than maximum available storage space of the first bus device, but also helps avoid a waste of storage resources of the first bus device caused by the address space allocated by the bus controller to the first bus device being far less than available storage space of the first bus device.

In the method provided in the first aspect, the first bus device may be any bus device in the bus network, or any bus device that supports mapping storage space of the bus device to the address space of the bus. The first bus device may send the device information of the first bus device by using a packet, and the bus controller may receive the device advertisement information by using a packet. The packet sent by the first bus device may be different from the packet received by the bus controller. For example, the packet sent by the first bus device may not include the path information, and the packet received by the bus controller may include the device information of the first bus device and may further include the path information. Optionally, the device information of the first bus device and the path information in the device advertisement information may alternatively be encapsulated in different packets. In addition to the device information of the first bus device, the device advertisement information received by the bus controller may further include device information of another bus device, and device information of different bus devices may be encapsulated in a same packet or different packets.

According to a second aspect, this application provides a bus technology-based device management method. The method is applied to a bus network, the bus network includes a plurality of bus devices interconnected through a bus, and a bus controller runs in the bus network. For understanding of the bus controller, refer to the bus controller described in the first aspect. In the method, a first bus device in a bus network actively sends device information of the first bus device after being powered on. The bus controller receives device advertisement information, where the device advertisement information includes the device information of the first bus device. The bus controller allocates address space of the bus to the first bus device based on the device information of the first bus device, and sends configuration information to the first bus device, where the configuration information includes address information for describing the address space. The first bus device receives the configuration information, and maps, based on an indication of the configuration information, all or a part of storage space of the first bus device to the address space described by the address information.

In the method provided in the second aspect, for possible steps performed by the bus controller, the first bus device, and another bus device in the bus network, refer to the steps performed by the corresponding devices in the first aspect for understanding. Details are not described herein again.

For example, in a possible implementation of the first aspect, the device information of the first bus device is forwarded to the bus controller by one or more bus devices in the bus network after being sent from the first bus device.

For example, in a possible implementation of the second aspect, after receiving the device information of the first bus device, a bus device connected to the first bus device in the bus network may forward the device information of the first bus device and path information for forwarding the device information of the first bus device by the bus device. The path information for forwarding the device information of the first bus device by the bus device includes information indicates that the device information of the first bus device is forwarded by the bus device. Optionally, the bus device encapsulates the device information of the first bus device and the path information for forwarding the device information of the first bus device by the bus device into a same packet, and then forwards the packet.

For example, in a possible implementation of the second aspect, after receiving the device information of the first bus device, the bus device connected to the first bus device in the bus network forwards the device information in a broadcast manner.

For example, in a possible implementation of the second aspect, the method further includes: The bus controller sends device information of the bus controller to at least one bus device connected to the bus controller; and the at least one bus device records, based on the device information of the bus controller, information about a port for connecting to the bus controller.

For example, in a possible implementation of the second aspect, the method further includes: A second bus device in the bus network actively send device information of the second bus device to the bus controller after being powered on; the at least one bus device forwards the device information of the second bus device to the bus controller based on the information about the port of the bus controller; and the bus controller receives the device information of the second bus device.

For example, in a possible implementation of the second aspect, the method further includes: The first bus device sends status advertisement information of the first bus device to the bus controller, where the status advertisement information indicates that the first bus device is to exit the bus network or is still connected to the bus network; the at least one bus device forwards the status advertisement information to the bus controller based on the information about the port of the bus controller; and the bus controller receives the status advertisement information, and determines a connection status of the first bus device in the bus network based on the status advertisement information.

A third aspect of this application provides a bus controller. The bus controller is deployed in a bus network, and the bus network includes a plurality of bus devices connected through a bus. The bus controller may be a bus device, or some components (for example, a processor, a chip, or a chip system) of a bus device, or a logical module or software that implements all or some functions of a bus device.

The bus controller may include a transceiver module and a processing module. The transceiver module may be configured to receive device advertisement information. The device advertisement information includes device information of the first bus device, and the device information of the first bus device is actively sent by the first bus device to the bus controller after the first bus device is powered on. The processing module is configured to allocate address space of the bus to the first bus device based on the device information of the first bus device. The transceiver module is further configured to send configuration information to the first bus device. The configuration information includes address information for describing the address space.

In a possible implementation of the third aspect, the device information of the first bus device is forwarded to the bus controller by one or more bus devices in the bus network after being sent from the first bus device.

In a possible implementation of the third aspect, the device advertisement information further includes path information, and the path information includes information indicating that the device information of the first bus device is forwarded by the one or more bus devices. The processing module is further configured to determine a forwarding path of the device advertisement information between the first bus device and the bus controller based on the path information.

In a possible implementation of the third aspect, when the device information of the first bus device is forwarded to the bus controller by using the plurality of bus devices in the bus network, the transceiver module is specifically configured to separately receive a plurality of pieces of device advertisement information. The device information of the first bus device in the plurality of pieces of device advertisement information is forwarded through different forwarding paths. The processing module is configured to determine a plurality of corresponding forwarding paths based on the path information in each of the plurality of pieces of device advertisement information.

In a possible implementation of the third aspect, the transceiver module is specifically configured to determine a target forwarding path based on the plurality of forwarding paths, and send the configuration information to the first bus device through the target forwarding path.

In a possible implementation of the third aspect, the transceiver module is further configured to send device information of the bus controller to at least one bus device connected to the bus controller. The device information of the bus controller indicates the at least one bus device to record information about a port for connecting to the bus controller.

In a possible implementation of the third aspect, the transceiver module is further configured to receive device information of a second bus device in the bus network. The device information of the second bus device is actively sent by the second bus device to the bus controller after the second bus device is powered on, and the device information of the second bus device is forwarded by the at least one bus device based on the recorded information about the port connected to the bus controller.

In a possible implementation of the third aspect, the transceiver module is further configured to receive status advertisement information of the first bus device. The status advertisement information of the first bus device indicates that the first bus device is to exit the bus network or is still connected to the bus network, and the status advertisement information of the first bus device is forwarded by at least one bus device based on the recorded information about the port connected to the bus controller. The determining module is further configured to determine a connection status of the first bus device in the bus network based on the status advertisement information of the first bus device.

In a possible implementation of the third aspect, a device type of the bus device that forwards the device information of the first bus device in the bus network includes a bus switch.

In a possible implementation of the third aspect, the device information of the first bus device includes an identifier of the first bus device, and the identifier of the first bus device includes at least one of a device type of the first bus device, a vendor identifier of the first bus device, and a device identifier of the first bus device.

In a possible implementation of the third aspect, the device information of the first bus device includes a size of address space required by the first bus device.

In a possible implementation of the third aspect, the plurality of bus devices are disposed in at least two computer devices.

According to a fourth aspect, this application further provides a bus device. The bus device includes a processor and a memory. The processor is coupled to the memory, and the processor is configured to perform, based on instructions stored in the memory, the method according to any one of the first aspect or the possible implementations of the first aspect.

According to a fifth aspect, this application further provides a computer program product, including computer-readable instructions. When the computer-readable instructions are run on a computer, the computer is caused to perform the method according to any one of the first aspect or the possible implementations of the first aspect.

According to a sixth aspect, this application further provides a computer-readable storage medium. The computer-readable storage medium stores instructions, and when the instructions are run on a computer, the computer is caused to perform the method according to any one of the first aspect or the possible implementations of the first aspect.

A seventh aspect of this application provides a chip, including a processor. The processor is configured to read and execute a computer program stored in a memory, to perform the method in any possible implementation of any one of the foregoing aspects. Optionally, the chip includes a memory, and the memory is connected to the processor through a circuit or a wire. Optionally, the chip further includes a communication interface, and the processor is connected to the communication interface. The communication interface is configured to receive data and/or information that needs to be processed. The processor obtains the data and/or the information from the communication interface, processes the data and/or the information, and outputs a processing result through the communication interface. The communication interface may be an input/output interface.

An eighth aspect of this application provides a bus network. The bus network includes a plurality of bus devices connected through a bus, a bus controller runs in the bus network, and the bus controller is configured to perform the method according to any one of the first aspect and the possible implementations.

For implementations and technical effects of the apparatus provided in this application, refer to technical effects brought by corresponding implementations in the method provided in this application. Details are not described herein again.

### BRIEF DESCRIPTION OF DRAWINGS

FIG. 1 illustrates a possible structure of a bus network;
FIG. 2 illustrates another possible structure of a bus network;
FIG. 3 illustrates a possible procedure of a bus technology-based device management method according to an embodiment of this application;
FIG. 4 illustrates a process in which a bus switch 1 broadcasts an advertisement packet of a CPU;
FIG. 5 illustrates a forwarding path for sending a configuration packet 1 by a bus controller to a CPU through a bus switching network;
FIG. 6 illustrates a method for managing a newly added SSD in a bus network;
FIG. 7 illustrates a method for managing exiting of an SSD from a bus network;
FIG. 8 illustrates a structure of a bus controller; and
FIG. 9 illustrates a structure of a bus device.

### DESCRIPTION OF EMBODIMENTS

Some terms in this application are first described, so as to help persons skilled in the art have a better understanding.

A bus (bus) is a public communication trunk for transmitting information between various functional components (referred to as bus devices) of a computer. Based on types of information transmitted by the computer, the bus of the computer can be classified into a data bus, an address bus, and a control bus, to transmit data, an address of the data, and a control signal, respectively.

A bus device is an electronic device or a computer device that has a bus interface, supports a bus protocol, or can communicate with another device through the bus. The bus device may be a central processing unit (central processing unit, CPU), a network interface card, a memory, a solid state drive (solid state drive, SSD), an input/output device, or the like.

A bus network includes a plurality of bus devices connected through the bus.

A bus controller is configured to manage the bus devices in the bus network, for example, may be responsible for discovering and registering with the bus devices in the bus network. The bus controller may run on a bus device, and may be implemented by using software and/or hardware. A type of the bus device on which the bus controller is located is not limited in this application. For example, the bus controller may run on a bus device like a CPU or a network interface card. In the following, the bus controller may alternatively be a bus device having a function of the bus controller.

A bus terminal may run on a bus device, and may be implemented by using software and/or hardware. The bus terminal may support mapping all or a part of storage resources in the bus device on which the bus terminal is located to address space of the bus, so that another bus device can directly access the storage resources. A type of the bus device on which the bus terminal is located is not limited in this application. For example, the bus terminal may run on a bus device like a CPU, a network interface card, a memory, an SSD, or an input/output device. In the following, the bus terminal may alternatively be a bus device having a function of the bus terminal.

A bus switch (switch) is configured to implement interconnection and routing (or forwarding) through the bus. The bus switch may run on a bus device, and may be implemented by using software and/or hardware. A type of the bus device on which the bus switch is located is not limited in this application. For example, the bus switch may run on a bus device like a CPU or a network interface card. In the following, the bus switch may alternatively be a bus device having a function of the bus switch. One or more bus switches may construct one or more physical links or forwarding paths between other different bus devices, to implement access between different bus devices.

A hybrid bus device may have a plurality of functions, for example, may have functions of two of the bus controller, the bus terminal, and the bus switch. The bus controller, the bus terminal, and the bus switch mentioned below may be hybrid bus devices.

A network topology is a method of studying a relationship between points and lines that are irrelevant to sizes and shapes in topology. The bus device in the bus network is abstracted as a point, and a transmission medium (for example, the bus) is abstracted as a line. A geometric diagram formed by the points and the lines is a network topology (or a topology structure) of the bus network. A type of the network topology may include but is not limited to a ring topology, a tree topology, a star topology, a hybrid topology, a mesh topology, and the like.

A type of the bus is not limited in this application. For example, the bus may be a peripheral component interconnect express (peripheral component interconnect express, PCIe) bus, an extended industry standard architecture (extended industry standard architecture, EISA) bus, a unified bus (unified bus, Ubus, or UB), a computer express link (compute express link, CXL), a cache coherent interconnect for accelerators (cache coherent interconnect for accelerators, CCIX) bus, a nvidia link (nvidia link, NVLINK) bus, or the like.

The bus network may include a plurality of bus devices of a same type or different types, for example, may include a bus controller, a bus terminal, and a bus switch. Bus domains can access each other only after unified address allocation. Therefore, after the bus terminal is powered on and initialized, bus terminals need to obtain allocated address space from the bus controller before accessing each other.

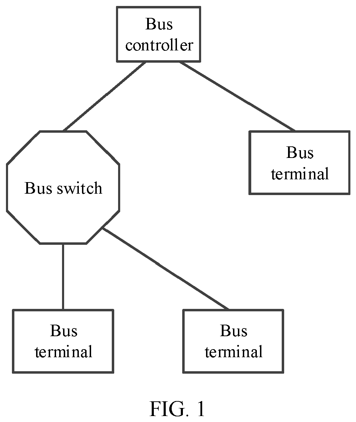

In an existing management mechanism of the bus network, the bus controller discovers and registers with the bus terminals through enumeration scanning. FIG. 1 illustrates a possible structure of the bus network. As shown in FIG. 1, the bus network includes a bus controller, a bus switch, and three bus terminals. In the accompanying drawings of this application, a hexagon represents the bus switch, and different sides of the hexagon represent different ports of the bus switch. A line between different bus devices in FIG. 1 represents a bus. It is assumed that the bus shown in FIG. 1 is a PCIe bus. As shown in FIG. 1, three different ports of the bus switch are respectively connected to two bus terminals and one bus controller, and the bus controller is further directly connected to one bus terminal. The bus controller may use a master-slave (master-slave) model to sequentially scan and discover each bus terminal. For example, the bus controller first performs PCIe link training, then reads a register of configuration space (or referred to as PCIe space) of the bus terminal through enumeration scanning, receives a transaction layer packet (transaction layer packet, TLP) returned by the bus terminal in response to an enumeration packet, writes TLP configuration information, and then allocates and configures address space to the bus terminal, to implement normal use of the bus terminal.

However, to discover the bus terminal connected to the bus switch, the bus controller needs to first read and configure configuration space of the bus switch by using the enumeration packet, so that the bus switch determines a forwarding path to the bus controller, for example, determines a port, in the ports of the bus switch, leading to the bus controller. In this way, the bus switch may forward the enumeration packet to the connected bus terminal based on the configured forwarding path, and forward the TLP to the bus controller. In other words, the bus controller needs to first configure the bus switch, and then discover the bus terminal connected to the port of the bus switch. This increases latency in discovering the bus terminal by the bus controller.

In addition, a scanning process can only be initiated by a CPU acting as the bus controller, and the other bus devices serve as slave devices. In addition, due to a limited range of configuration space, a registration capability across a plurality of levels of bus switches (for example, 1K+ bus device nodes) cannot be implemented.

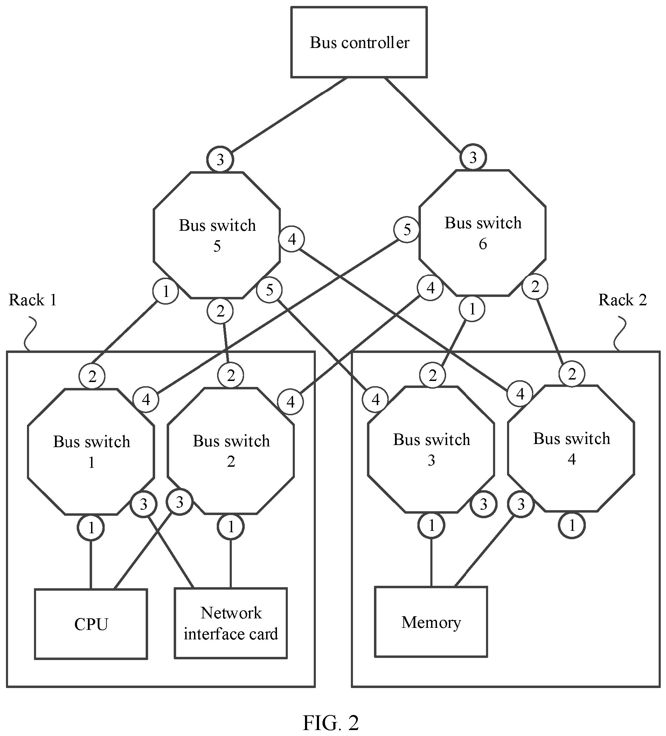

In addition, as a scale of the bus network continuously increases, the bus network includes more bus switches and bus terminals. The bus devices in the bus network may be disposed in a plurality of compute devices (or compute device clusters). FIG. 2 illustrates another possible structure of the bus network. FIG. 2 uses an example in which the bus network includes a bus controller, three bus terminals, and six bus switches. The three bus terminals are respectively a CPU, a network interface card, and a memory, and the six bus switches are respectively a bus switch 1 to a bus switch 6. For ease of description, the bus switch 1 to the bus switch 6 are referred to as a bus switching network in the following. The bus switching network has a plurality of ports for connecting to other bus devices in the bus network. The other bus devices include the bus controller, the CPU, the network interface card, and the memory. The plurality of ports (the ports in bold in FIG. 2) of the bus switching network include a port 1 and a port 3 of each bus switch in the bus switch 1 to the bus switch 4, and further include a port 3 of the bus switch and a port 3 of the bus switch 6. FIG. 2 illustrates two compute devices (a rack 1 and a rack 2) that include bus devices. The bus devices in the bus network may be located on more or fewer compute devices. FIG. 2 uses an example in which the compute device is a rack server. The compute device may be another type of device.

As shown in FIG. 2, there is at least one forwarding path between any two different external ports of the bus switching network, each forwarding path passes through at least one bus switch, and a forwarding path between the bus controller and the bus terminal passes through at least two bus switches. It can be learned that, as the scale of the bus network continuously increases, the bus controller needs to traverse more bus switches to discover a bus terminal. As a result, the bus controller needs to configure forwarding paths to the bus controller for more bus switches before sending an enumeration packet to a bus terminal connected to the bus switches and receiving a TLP returned by the bus terminal. Consequently, latency in discovering the bus terminal by the bus controller continuously increases, and it is difficult to ensure management efficiency of the bus network. In addition, because the bus controller needs to separately configure forwarding paths between different ports in the plurality of ports in each bus switch, a load of the bus controller is heavy. This increases a probability of a fault occurring in the bus controller, and reduces reliability of the bus network.

In view of this, this application provides a bus technology-based device management method. After being powered on, a bus device may actively send device information of the bus device to a bus controller without waiting to receive an enumeration packet sent by the bus controller. After receiving the device information of the bus device, the bus controller allocates address space of a bus to the bus device based on the device information of the bus device. In this way, not only latency in discovering the bus device by the bus controller is reduced, and efficiency of managing a bus network by the bus controller is improved, but also a load of the bus controller is reduced, and a probability of a fault occurring in the bus controller is reduced, thereby improving reliability of the bus network.

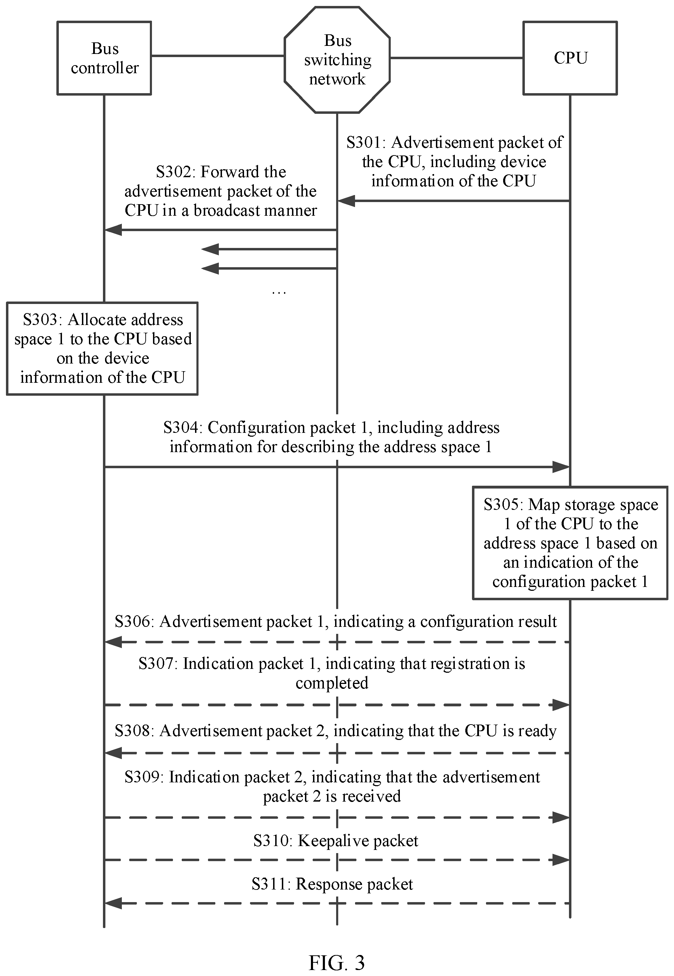

The following describes, by using an example based on the structure of the bus network shown in FIG. 2, a method procedure in which the bus controller manages the CPU by traversing the bus switch 1 to the bus switch 6. As shown in FIG. 2, the bus controller is separately connected to the port 3 of the bus switch 5 and the port 3 of the bus switch 6 in the bus switching network, and the CPU is separately connected to the port 1 of the bus switch 1 and the port 3 of the bus switch 2 in the bus switching network. For ease of description, the port 3 of the bus switch 5 and the port 3 of the bus switch 6 are collectively referred to as a first port of the bus switching network, and the port 1 of the bus switch 1 and the port 3 of the bus switch 2 are collectively referred to as a second port of the bus switching network. FIG. 3 illustrates a procedure of the method according to this application. The method may include steps S301 to S305.

S301: The CPU sends an advertisement packet of the CPU to the second port, and correspondingly, the bus switching network receives the advertisement packet from the second port, where the advertisement packet includes device information of the CPU.

The CPU may send the advertisement packet of the CPU to the second port. Correspondingly, the bus switching network may receive the advertisement packet from the second port. The advertisement packet includes the device information of the CPU. The device information of the CPU may include an identifier of the CPU. Specific content of the identifier of the CPU is not limited in this application, provided that the identifier of the CPU can be used to uniquely identify an identity of the CPU in the bus network. For example, the identifier of the CPU may include at least one of a device type, a vendor identifier (identifier, ID), and a device ID of the CPU.

The device information of the CPU may further include a size of address space required by the CPU. The size of the address space required by the CPU may be a size of address space, in storage space of the CPU, directly accessible to another bus device in the bus network. This helps the bus controller allocate address space to the CPU based on the size of the address space required by the CPU, thereby improving accuracy of allocating the address space by the bus controller to the CPU.

Table 1 illustrates possible content of the advertisement packet of the CPU sent by the CPU to the second port. As shown in Table 1, the advertisement packet of the CPU includes six fields: a device type field, a device ID field, a vendor identifier field, a device-required address space field, a device start address field, and a device end address field. A value of the device type field indicates the device type of the device, a value of the device ID field indicates the device ID of the device, a value of the vendor ID field indicates the vendor ID of the device, a value of the device-required address space field indicates the size of the address space required by the device, and a value of the device start address field and a value of the device end address field respectively indicate a start address and an end address of the address space allocated by the bus controller to the device.

**Table 1**

| Device type field: CPU | Device ID field: D1 | Vendor ID field: V1 |
|---|---|---|
| Device-required address space field: 1 KB | Device start address field: empty | Device end address field: empty |

Table 1 further illustrates, by using content after the colons, information indicated by the values of the foregoing fields in the advertisement packet of the CPU. As shown in Table 1, in the advertisement packet of the CPU, the value of the device type field indicates that the device type of the bus device that sends the advertisement packet is the CPU, the value of the device ID field indicates that the device ID of the bus device is D1, the value of the vendor ID field indicates that the vendor ID of the bus device is V1, the value of the device-required address space field indicates that the size of the address space required by the bus device is 1 KB, and the value of the device start address field and the value of the device end address field respectively indicate "empty". "Empty" may indicate an invalid address or a default address. The default address is not used to describe the address space allocated by the bus controller to the bus device. The default address may indicate that the bus controller has not allocated address space to the bus device.

After being powered on or initialized, the CPU may actively send the advertisement packet of the CPU to the second port. A specific process of initializing the CPU is not limited in this application. For example, CPU initialization includes BIOS initialization and/or a physical-layer auto-negotiated link (link) between a port of the CPU and the second port of the bus switching network. Specific content of auto-negotiation between the port of the CPU and the second port of the bus switching network is not limited in this application. For example, in a process of performing auto-negotiation between ports, link establishment processes such as negotiation of interface rates of the two interconnected ends, training of serializer/deserializer (serializer/deserializer, SERDES) parameters at a physical layer of a link, clock alignment, and channel binding may be performed.

In this application, there is no limitation that the CPU immediately sends the advertisement packet of the CPU after completing initialization. Optionally, the CPU may send the advertisement packet of the CPU after a period of time after completing initialization.

In this application, there is no limitation that the CPU sends the advertisement packet to the second port once. Optionally, the CPU may send the advertisement packet to the second port a plurality of times, so that a probability that the bus controller successfully receives the advertisement packet of the CPU is increased.

As described above, the second port may include the port 1 of the bus switch 1 and the port 3 of the bus switch 2. The CPU may separately send the advertisement packet of the CPU to each port (for example, the port 1 of the bus switch 1 and the port 3 of the bus switch 2) in the second port. This helps increase the probability that the bus controller successfully receives the advertisement packet of the CPU. Optionally, the CPU may alternatively send the advertisement packet of the CPU to one port in the second port.

In actual application, a quantity of ports that are of the bus switching network and that are connected to the CPU is not limited in this application. For example, the port (namely, the first port) that is of the bus switching network and that is connected to the CPU may include only one port or include a plurality of ports.

S302: The bus switching network forwards the advertisement packet in a broadcast manner, and correspondingly, the bus controller receives the advertisement packet from the first port.

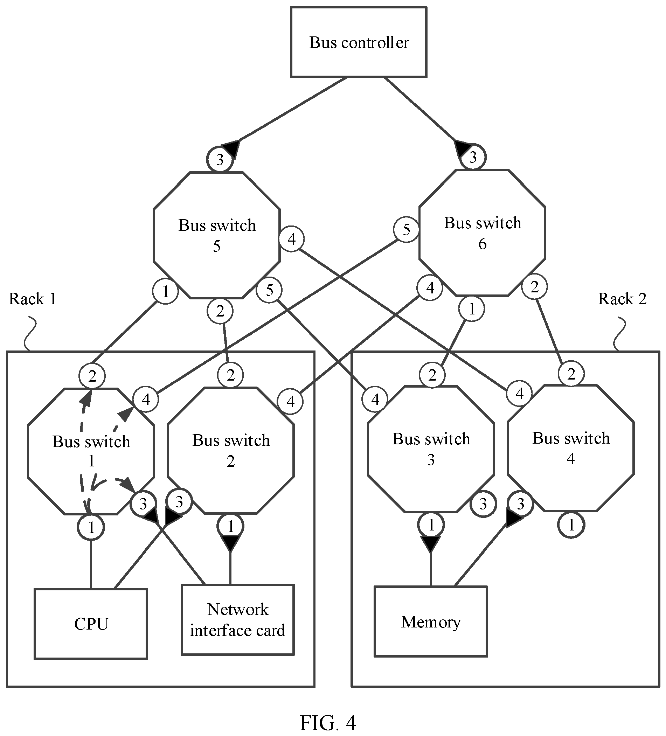

After receiving the advertisement packet of the CPU from the second port, the bus switching network may forward the advertisement packet in the broadcast manner. When there are forwarding paths between the second port and all other ports of the bus switching network, the bus switching network may forward the advertisement packet to all ports (for example, ports marked with triangles in FIG. 4) except the second port. Correspondingly, based on existence of a forwarding path between the second port connected to the CPU and the first port connected to the bus controller, the bus switching network may forward the advertisement packet of the CPU to the bus controller through the first port, and the bus controller may receive the advertisement packet of the CPU from the first port.

As shown in FIG. 4, there are forwarding paths between all ports of the bus switching network connected to the network interface card and the memory and the second port. Therefore, the bus switching network may forward the advertisement packet of the CPU to the network interface card through the port 3 of the bus switch 1 and the port 1 of the bus switch 2 respectively, and may forward the advertisement packet of the CPU to the memory through the port 1 of the bus switch 3 and the port 3 of the bus switch 4 respectively. The network interface card and the memory may separately receive the advertisement packet, or may not receive or discard the advertisement packet of the CPU based on that device types of the network interface card and the memory are not bus controllers.

That the bus switching network forwards the advertisement packet in the broadcast manner may mean that each bus switch that receives the advertisement packet in the bus switching network forwards the advertisement packet in the broadcast manner. FIG. 4 is a diagram of broadcasting the advertisement packet by the bus switch 1 after receiving the advertisement packet of the CPU. As shown by a dashed line with an arrow in FIG. 4, after receiving the advertisement packet of the CPU through the port 1 of the bus switch 1, the bus switch 1 replicates the advertisement packet to obtain three advertisement packets, and then forwards the three advertisement packets through other ports (namely, a port 2 to a port 4) of the bus switch 1.

As shown in FIG. 4, there may be a plurality of forwarding paths between the first port and the second port. The plurality of forwarding paths include a plurality of forwarding paths between the port 1 of the bus switch 1 and the port 3 of the bus switch 5, a plurality of forwarding paths between the port 1 of the bus switch 1 and the port 3 of the bus switch 6, a plurality of forwarding paths between the port 3 of the bus switch 2 and the port 3 of the bus switch 6, and a plurality of forwarding paths between the port 3 of the bus switch 2 and the port 3 of the bus switch 6. In the plurality of forwarding paths between the port 1 of the bus switch 1 and the port 3 of the bus switch 5, the port 1 of the bus switch 1 may be connected to the port 3 of the bus switch 5 through a port 2 of the bus switch 1 and a port 1 of the bus switch 5 sequentially, or the port 1 of the bus switch 1 may be connected to the port 3 of the bus switch 5 through a port 4 of the bus switch 1, a port 5 of the bus switch 6, a port 4 of the bus switch 6, a port 4 of the bus switch 2, a port 2 of the bus switch 2, and a port 2 of the bus switch 5 sequentially, or the port 1 of the bus switch 1 may be connected to the port 3 of the bus switch 5 through a port 4 of the bus switch 1, a port 5 of the bus switch 6, a port 1 of the bus switch 6, a port 2 of the bus switch 3, a port 4 of the bus switch 3, and a port 5 of the bus switch 5 sequentially.

Therefore, after forwarding the advertisement packet in the broadcast manner, the bus switching network may separately send, to the bus controller through the first port, a plurality of advertisement packets forwarded through different forwarding paths in the plurality of forwarding paths. The bus controller may receive one or all of the plurality of advertisement packets.

S303: The bus controller allocates address space 1 to the CPU based on the device information of the CPU in the advertisement packet.

After receiving the advertisement packet of the CPU, the bus controller may allocate address space (denoted as the address space 1) to the CPU based on the device information of the CPU in the advertisement packet. The bus controller may allocate the address space 1 to the bus device from global address space (or referred to as a bus domain) of the bus network. In other words, the address space 1 allocated to the bus device is a subset of the global address space.

The global address space may be maximum addressing space of an address bus in the bus network. For example, it is assumed that a maximum addressing capability of the address bus in the bus network is 4 GB, and a start address and an end address of the global address space (or referred to as a bus domain) of the bus network may be 1 and 4 GB respectively.

As described above, the advertisement packet of the CPU may include the size of the address space required by the CPU, and the bus controller may allocate the address space 1 to the CPU based on the size of the address space required by the CPU in the advertisement packet of the CPU. As shown in Table 1, it is assumed that the size of the address space required by the CPU is 1 KB, and the bus controller may allocate, from the global address space, the address space 1 whose size is 1 KB to the CPU.

To ensure that the bus controller allocates different address space to different bus devices, the bus controller may maintain address allocation information. The address allocation information indicates address space that has not been allocated in the global address space, and further indicates a binding relationship between each allocated address space and an identifier of a bus device to which the address space is allocated. It is assumed that the identifier of the CPU in the advertisement packet of the CPU is "CPU, D1, V1". After allocating the address space 1 to the CPU based on the size of the required address space in the device information of the CPU, the bus controller may update the address allocation information based on the address space 1 and the identifier of the CPU in the device information of the CPU. Updated address allocation information may indicate a binding relationship between the address space 1 and "CPU, D1, V1".

S304: The bus controller sends a configuration packet 1 to the CPU through the bus switching network, and correspondingly, the CPU receives the configuration packet 1 through the bus switching network, where the configuration packet 1 includes address information for describing the address space 1.

After allocating the address space 1 to the CPU, the bus controller may send the configuration packet 1 to the CPU through the bus switching network. Correspondingly, the CPU may receive the configuration packet 1 through the bus switching network. The configuration packet 1 includes the address information for describing the address space 1 allocated by the bus controller to the CPU, and the configuration packet 1 may indicate the CPU to map all or a part of the storage space of the CPU to the address space 1 described by the address information.

The address space 1 may be a continuous address range or a plurality of discontinuous address ranges. A specific manner in which the address information in the configuration packet 1 describes the address space 1 is not limited in this application, provided that the address information can describe each address range of the address space 1. For example, for any address range in the address space 1, the address information may include at least one of information such as a start address, an end address, and a length of the address range.

In addition to the address information for describing the address space 1, the configuration packet 1 may further include other information. For example, the configuration packet 1 may further include all information or a part of information (for example, the identifier of the CPU) in the device information of the CPU. Table 2 shows possible content of the configuration packet 1. For meanings and content of fields in the configuration packet 1 shown in Table 2, refer to the related content in Table 1 for understanding. However, values of a device start address field and a device end address field in the configuration packet 1 shown in Table 2 are different from the values of the corresponding fields in Table 1. In the configuration packet 1 shown in Table 2, the value of the device start address field may indicate the start address (denoted as an address 1) of each address range in the address space 1, and the value of the device end address field may indicate the end address (denoted as an address 2) of each address range in the address space 1.

**Table 2**

| Device type field: CPU | Device ID field: D1 | Vendor ID field: V1 |
|---|---|---|
| Device-required address space field: 1 KB | Device start address field: address 1 | Device end address field: address 2 |

After generating the configuration packet 1, the bus controller may send the configuration packet 1 to the first port of the bus switching network. When the first port includes a plurality of ports (for example, the ports 3 of the bus switch 5 and the bus switch 6 shown in FIG. 4), the bus controller may send the configuration packet 1 to each port in the first port, to increase a probability that the CPU successfully receives the configuration packet 1, or the bus controller may send the configuration packet 1 to all or a part of the ports in the first port that receive the advertisement packet of the CPU. Optionally, the bus controller may obtain and record a plurality of forwarding paths to the CPU, to determine a part of the forwarding paths to the CPU (for example, a forwarding path with a minimum latency), and then send the configuration packet 1 to a port (for example, the port 1 of the bus switching network 5) on the forwarding path. When there are a plurality of forwarding paths with a minimum latency, the bus controller may send the configuration packet 1 to ports on one or more of the forwarding paths. The following describes a possible manner in which the bus controller obtains each forwarding path to the CPU. Details are not described herein.

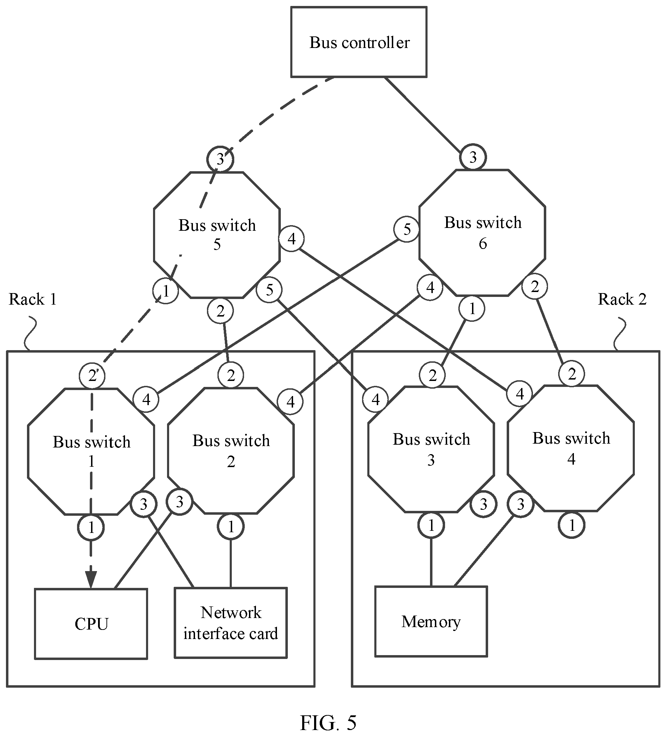

A manner in which the bus switching network forwards the configuration packet 1 to the CPU after receiving the configuration packet 1 from the first port is not limited in this application. In some examples, the bus switching network may forward the configuration packet 1 in the broadcast manner, so that the configuration packet 1 may be forwarded to the second port connected to the CPU. Alternatively, in some examples, the bus switching network may forward the configuration packet 1 to the CPU based on a forwarding path to the CPU (for example, a forwarding path represented by a dashed line with an arrow in FIG. 5). This helps save forwarding resources of the bus switching network and further helps improve security of the configuration packet 1.

A manner in which the bus switching network determines the forwarding path to the CPU is not limited in this application. Optionally, the bus switching network may record the forwarding path to the CPU and the identifier of the CPU in the advertisement packet in association in a process of receiving and broadcasting the advertisement packet of the CPU. In this way, when receiving the configuration packet 1 carrying the identifier of the CPU, the bus switching network may determine the forwarding path associated with the identifier of the CPU, and then forward the configuration packet 1 to the CPU based on the forwarding path.

A manner in which the bus switching network records the forwarding path to the CPU in the process of receiving and broadcasting the advertisement packet of the CPU is not limited in this application. For example, each bus switch that receives the advertisement packet of the CPU in the bus switching network may record a port that receives the advertisement packet and an identifier of the bus device in the advertisement packet in association. For example, after receiving the advertisement packet of the CPU from the port 1, the bus switch 5 may record "CPU, D1, V1" and the "port 1" in association. Then, after receiving, from the port 3 of the bus switch 5, the configuration packet 1 carrying "CPU, D1, V1", the bus switch 5 may send the configuration packet 1 to the port 1.

As described above, because the bus switching network forwards the advertisement packet of the CPU in the broadcast manner, a single bus switch may receive the advertisement packet of the CPU from a plurality of ports, and the bus switch may send the configuration packet 1 to each port that receives the advertisement packet, or may send the configuration packet 1 to one of the plurality of ports. Optionally, the bus switch may obtain and record a plurality of forwarding paths to the CPU, to determine a part of the forwarding paths (for example, a forwarding path with a minimum latency) to the CPU, and then send the configuration packet 1 to a port on the forwarding path. When there are a plurality of forwarding paths with a minimum latency, the bus switch may forward the configuration packet 1 based on one or more of the forwarding paths. The following describes a possible manner in which the bus switch obtains the plurality of forwarding paths to the CPU. Details are not described herein.

S305: The CPU maps storage space 1 of the CPU to the address space 1 based on an indication of the configuration packet 1.

After receiving the configuration packet 1, the CPU may configure configuration space of the CPU based on the indication of the configuration packet 1. For example, the CPU may map the storage space 1 of the CPU to the address space 1 based on the indication of the configuration packet 1. This helps another bus device in the bus network directly address the storage space 1 of the CPU based on the address space 1, and read data from the storage space 1 and/or write data into the storage space 1.

A size of the storage space 1 may be the same as a size of the address space 1, but values of start addresses and/or end addresses of the storage space 1 and the address space 1 may be the same or different, and distribution statuses of the storage space 1 and the address space 1 may be the same or different. For example, the storage space 1 and the address space 1 may correspond to a continuous address range, or the storage space 1 corresponds to a continuous address range but the address space 1 corresponds to a plurality of discontinuous address ranges, or the storage space 1 corresponds to a plurality of discontinuous address ranges but the address space 1 corresponds to a continuous address range, or the storage space 1 and the address space 1 each correspond to a plurality of discontinuous address ranges.

FIG. 3 illustrates a procedure in which the bus controller discovers and registers with the CPU. The bus controller may further discover and register with another bus device connected to the bus switching network, for example, may further discover and register with the network interface card and the memory. For a procedure in which the bus controller discovers the another bus device, refer to the procedure shown in FIG. 3.

After discovering and registering with the network interface card and the memory, the bus controller may separately update the address allocation information described above. The updated address allocation information may not only indicate a binding relationship between the address space 1 and "CPU, D1, V1", but also indicate a binding relationship between address space 2 and "network interface card, D2, V2", and a binding relationship between address space 3 and "memory, D3, V3". The address space 2 and the address space 3 are different address space in the global address space except the address space 1. D2 and V2 respectively represent a device ID and a vendor ID of the network interface card. D3 and V3 respectively represent a device ID and a vendor ID of the memory.

After being powered on, the bus device actively sends the device information of the bus device to the bus controller without waiting to receive the enumeration packet sent by the bus controller. After receiving the device information of the bus device, the bus controller allocates the address space of the bus to the bus device based on the device information of the bus device. In this way, not only the latency in discovering the bus device by the bus controller is reduced, and the efficiency of managing the bus network by the bus controller is improved, but also the load of the bus controller is reduced, and the probability of the fault occurring in the bus controller is reduced, thereby improving the reliability of the bus network.

Optionally, as shown in FIG. 3, after S305, the method procedure may further include S306 and S307.

S306: The CPU sends an advertisement packet 1 to the bus controller through the bus switching network, where the advertisement packet 1 indicates a result of configuring the configuration space of the CPU by the CPU based on the indication of the configuration packet 1.

After configuring the configuration space of the CPU based on the instruction of the configuration packet 1, the CPU may send the advertisement packet 1 to the bus controller through the bus switching network. The advertisement packet 1 indicates the result of configuring the configuration space of the CPU by the CPU based on the indication of the configuration packet 1. The configuration result indicates that configuration passes (pass) or fails (fail).

S307: The bus controller sends an indication packet 1 to the CPU through the bus switching network, where the indication packet 1 indicates that registration with the CPU is completed.

When the advertisement packet 1 indicates that configuration passes, the bus controller may determine that the storage space of the CPU can be directly accessed. Optionally, the bus controller may expose all or a part of the address space 1 of the CPU to another bus device (for example, the network interface card or the memory) in the bus network for access. Then, the bus controller may send the indication packet 1 to the CPU through the bus switching network, where the indication packet 1 indicates that registration with the CPU is completed.

When the advertisement packet 1 indicates that configuration fails, the bus controller may repeatedly send the configuration packet 1 until an advertisement packet that is sent by the CPU and that indicates that configuration passes is received or a timeout occurs. Within a period in which configuration performed by the CPU fails, the bus controller does not allow other bus devices to access the address space 1. If the bus controller does not receive, within a timeout period, the advertisement packet that is sent by the CPU and that indicates that configuration passes, the bus controller may reclaim the address space 1 allocated to the CPU.

Optionally, as shown in FIG. 3, after S305, the method procedure may further include S308 and S309.

S308: The CPU sends an advertisement packet 2 to the bus controller through the bus switching network, where the advertisement packet 2 indicates that the CPU is ready.

When completing configuration based on the indication of the configuration packet 1, the CPU may send the advertisement packet 2 to the bus controller through the bus switching network. The advertisement packet 2 indicates that the CPU is ready.

S309: The bus controller sends an indication packet 2 to the CPU through the bus switching network, where the indication packet 2 indicates that the advertisement packet 2 is received.

After receiving the advertisement packet 2, the bus controller may send the indication packet 2 to the CPU through the bus switching network. The indication packet 2 indicates that the advertisement packet 2 is received.

Optionally, as shown in FIG. 3, after S305, the method procedure may further include S310 and S311.

S310: The bus controller sends a keepalive packet to the CPU through the bus switching network.

S311: The CPU sends a response packet for the keepalive packet to the bus controller through the bus switching network.

If the bus controller receives the response packet of the CPU for the keepalive packet within preset duration, the bus controller may determine that the CPU is in position. If the bus controller does not receive the response packet of the CPU for the keepalive packet within the preset duration, the bus controller may determine that the CPU exits the bus network, deregister the CPU, and perform a device exit procedure on the CPU.

As described above, in a process of receiving and broadcasting the advertisement packet of the bus device connected to the bus switching network, the bus switching network may record a forwarding path to the bus device and the identifier of the bus device in the advertisement packet in association. Similarly, in some examples, the bus controller may send an advertisement packet of the bus controller to the first port of the bus switching network. The advertisement packet of the bus controller includes device information of the bus controller, and the device information of the bus controller indicates that a device type of the bus controller is a bus controller. The bus switching network may record a forwarding path to the bus controller in a process of receiving and broadcasting the advertisement packet of the bus controller. Then, the bus switching network may forward, based on the forwarding path, a packet sent to the bus controller. This helps save forwarding resources and improve packet security.

In the method example corresponding to FIG. 3, in S302, for example, the bus switching network forwards the advertisement packet of the CPU in the broadcast manner. A manner in which the bus switching network forwards the advertisement packet of the CPU is not limited in this application.

Optionally, the bus switch may obtain and record a plurality of forwarding paths to the bus controller, to determine a part of the forwarding paths (for example, a forwarding path with a minimum latency), and then send, to a port on the forwarding path, the packet sent to the bus controller. When there are a plurality of forwarding paths with a minimum latency, the bus switch may forward, based on one or more of the forwarding paths, the packet sent to the bus controller. The following describes possible manners in which the bus switch obtains the plurality of forwarding paths to the bus controller.

Optionally, after receiving the advertisement packet of the CPU, the bus switch in the bus switching network may add, to the advertisement packet of the CPU, information about a path of forwarding the advertisement packet by the bus switch, and then forward the advertisement packet based on the forwarding path. In this way, the bus controller may determine, based on the information about the forwarding path in the received advertisement packet, the forwarding path that the advertisement packet passes through in the bus switching network.

For example, after receiving the advertisement packet of the CPU from the port 1 of the bus switch 1, the bus switch 1 may add information about a forwarding path from the port 1 of the bus switch 1 to the port 2 of the bus switch 1 to the advertisement packet, and then send, to the port 2 of the bus switch 1, the advertisement packet to which the information about the forwarding path is added. Table 3 shows an example of the advertisement packet to which the information about the forwarding path is added. Content in first two rows in Table 3 may be understood with reference to the advertisement packet sent by the CPU shown in Table 1. Content in a third row in Table 3 indicates information (namely, the information about the forwarding path) for forwarding the advertisement packet or the device information in the advertisement packet by the bus switch 1. As shown in Table 3, the information about the forwarding path may include device information of the bus switch, information about a receiving port, and information about a sending port. As described in Table 3, the information about the forwarding path may indicate the bus switch 1 to receive, from the port 1 of the bus switch 1, the advertisement packet sent by the CPU, and forward the advertisement packet through the port 2 of the bus switch 1. Device information of the bus switch 1 may include an identifier of the bus switch 1. Specific content of the identifier of the bus switch 1 is not limited in this application, provided that the identifier of the bus switch 1 can be used to uniquely identify the bus switch 1 in the bus network or the bus switching network. For example, the identifier of the bus switch 1 may include at least one of a device type, a vendor identifier (identifier, ID), and a device ID of the bus switch 1. When storage space of the bus switch can be directly accessed by another bus device in the bus network, the device information of the bus switch may be understood with reference to content of the device information of the CPU. For example, the device information of the bus switch may further include a size of address space required by the bus switch.

**Table 3**

| Device type field: CPU | Device ID field: D1 | Vendor ID field: V1 |
|---|---|---|
| Device-required address space field: 1 KB | Device start address field: empty | Device end address field: empty |
| Switch information field: device information of the bus switch 1 | Receiving port field: port 1 | Sending port field: port 2 |

For example, after receiving, from the port 1 of the bus switch 5, the advertisement packet of the CPU forwarded by the bus switch 1, the bus switch 5 may add information about a forwarding path from the port 1 of the bus switch 5 to the port 3 of the bus switch 5 to the advertisement packet, and then send, to the port 3 of the bus switch 5, the advertisement packet to which the information about the forwarding path is added. Table 4 shows an example of the advertisement packet to which the information about the forwarding path is added. Content in first three rows in Table 4 may be understood with reference to the advertisement packet of the CPU sent by the bus switch 1 to the port 2 of the bus switch 1 shown in Table 3. Content in a fourth row in Table 4 indicates the bus switch 5 to receive the advertisement packet from the port 1 of the bus switch 5 and forward the advertisement packet through the port 3 of the bus switch 5. Device information of the bus switch 5 may be understood with reference to the identifier of the bus switch 1 described above.

**Table 4**

| Device type field: CPU | Device ID field: D1 | Vendor ID field: V1 |
|---|---|---|
| Device-required address space field: 1 KB | Device start address field: empty | Device end address field: empty |
| Switch information field: device information of the bus switch 1 | Receiving port field: port 1 | Sending port field: port 2 |
| Switch information field: device information of the bus switch 5 | Receiving port field: port 1 | Sending port field: port 3 |

After receiving the advertisement packet shown in Table 4 from the port 3 of the bus switch 5, the bus controller may determine that a third row and the fourth row in Table 4 are the information about the forwarding path added by the bus switching network to the advertisement packet, and may determine, based on content in the third row and the fourth row in Table 4, that the CPU is connected to the port 1 of the bus switch 1 and the bus controller is connected to the port 3 of the bus switch 5. In addition, a forwarding path of the advertisement packet of the CPU in the bus switching network is from the port 1 of the bus switch 1 to the port 3 of the bus switch 5 through the port 2 of the bus switch 1 and the port 1 of the bus switch 5 in sequence.

As described above, the bus switching network may forward the advertisement packet of the CPU in the broadcast manner. Therefore, the bus switching network may forward the advertisement packet of the CPU to the bus controller through different forwarding paths, and the information about the forwarding path in the advertisement packet forwarded through the different forwarding paths may be different. In this way, the bus controller may determine a plurality of forwarding paths between the CPU and the bus controller by receiving the advertisement packet of the CPU forwarded through the different forwarding paths.

Similarly, the bus switch in the bus switching network may add the information about the forwarding path to a forwarded advertisement packet of another bus device (for example, the network interface card and the memory). In this way, the bus controller may separately determine a plurality of forwarding paths between the network interface card and the bus controller and a plurality of forwarding paths between the memory and the bus controller.

Optionally, the bus controller may determine a network topology of the bus network shown in FIG. 2 based on the forwarding paths between the bus controller (namely, the bus controller) and all the CPU, the network interface card, and the memory. In this way, the bus controller can manage the bus network more accurately and efficiently.

Optionally, the bus switch in the bus switching network may record each forwarding path to the bus device based on information about the forwarding path in each advertisement packet of the bus device. This helps the bus switch record a plurality of forwarding paths to bus devices after separately broadcasting advertisement packets of the CPU, the network interface card, and the memory, thereby helping the bus switch separately forward a packet (for example, a configuration packet) to the bus devices based on optimal forwarding paths (for example, forwarding paths with minimum latency).

Optionally, after receiving the advertisement packet of the bus controller, the bus switch in the bus switching network may add, to the advertisement packet, information about a path of forwarding the advertisement packet by the bus switch, and then forward the advertisement packet based on the forwarding path. As described above, the bus switching network may forward the advertisement packet of the bus controller in the broadcast manner. Therefore, the bus switch in the bus switching network may receive the advertisement packet of the bus controller forwarded through different forwarding paths, and record a plurality of forwarding paths to the bus controller based on the information about the forwarding path in each advertisement packet of the bus controller. This helps the bus switch record a plurality of forwarding paths to bus controllers after broadcasting the advertisement packet of the bus controllers, thereby helping the bus switch forward a packet (for example, an advertisement packet of a newly added bus device and/or an exit advertisement packet of the bus device described below) to the bus controllers based on optimal forwarding paths (for example, forwarding paths with minimum latency).

After determining a plurality of forwarding paths to the bus devices connected to the bus switch in the bus switching network, the bus switch may determine the network topology (for example, shown in FIG. 2) of the bus network. In this way, the bus controller can forward the packet more accurately and efficiently.

Based on that the bus switch records the network topology of the bus network or the forwarding path to the bus device, when receiving the configuration packet of the bus device sent by the bus controller, the bus switch may record address information of address space of the bus device and information about the bus device in the network topology or the forwarding path in association. This helps the bus switch subsequently route, after receiving a packet for accessing the address space, the packet based on the forwarding path to the bus device.

Optionally, the bus switch in the bus switching network may alternatively send an advertisement packet of the bus switch, and the advertisement packet of the bus switch may include the device information of the bus switch. In addition, after receiving an advertisement packet sent by another bus switch, the bus switch in the bus switching network may forward the advertisement packet in the broadcast manner.

As described above, each bus device in the bus network may send an advertisement packet of the bus device. In addition to sending the advertisement packet of the bus switch, the bus switch may further forward, in the broadcast manner, an advertisement packet received from another bus device, and add information about a forwarding path to the forwarded advertisement packet.

In a possible implementation, after receiving a plurality of advertisement packets, the bus switch may separately broadcast the plurality of advertisement packets. Alternatively, in a possible implementation, after receiving a plurality of advertisement packets, the bus switch may combine or aggregate the plurality of advertisement packets and then broadcast a combined or aggregated advertisement packet. This not only helps reduce a quantity of times that the bus controller receives the advertisement packets and reduce a load of the bus controller, but also helps reduce a plurality of times of repeated sending of same information and save transmission resources of the bus network.

A manner in which the bus switch obtains the aggregated advertisement packet is not limited in this application. For example, when a device type of a peer device is a bus terminal and does not include a bus switch, after receiving device information of the peer device, the bus switch may determine that there is no need to receive device information of another bus device from the peer device. When a device type of a peer device includes a bus switch, after receiving device information of the peer device, the bus switch may further wait to receive device information of another bus device from the peer device. Then, the bus switch may aggregate received device information of a plurality of bus devices (for example, encapsulate the device information into a same packet).

After separately receiving the advertisement packet of the CPU and the advertisement packet of the network interface card, the bus switch 1 may separately send a combined advertisement packet to the port 2 and the port 4 of the bus switch 1. Table 5 shows content of the combined advertisement packet sent by the bus switch 1 to the port 2 of the bus switch 1. A first row in Table 5 respectively indicates the device information of the bus switch 1, a port that receives the advertisement packet on the bus switch 1, and a port that sends the combined advertisement packet on the bus switch 1. A second row and a third row in Table 5 represent content (for example, the device information of the CPU) in the advertisement packet sent by the CPU to the port 1, and a fourth row and a fifth row in Table 5 represent content (for example, device information of the network interface card) in the advertisement packet sent by the network interface card to the port 3.

**Table 5**

| Switch information field: device information of the bus switch 1 | Receiving port field: port 1 and port 3 | Sending port field: port 2 |
|---|---|---|
| Device type field: CPU | Device ID field: D1 | Vendor ID field: V1 |
| Device-required address space field: 1 KB | Device start address field: empty | Device end address field: empty |
| Device type field: network interface card | Device ID field: D2 | Vendor ID field: V2 |
| Device-required address space field: 1 KB | Device start address field: empty | Device end address field: empty |

Similarly, the bus switch 5 may further separately receive and combine combined advertisement packets sent by the bus switch 2, the bus switch 3, and the bus switch 4. The combined advertisement packet sent by the bus switch may include content (for example, device information) in advertisement packets of bus terminals connected to the bus switch. The bus switch 5 may send the combined advertisement packet to the port 3 of the bus switch 5. Table 6 shows the combined advertisement packet sent by the bus switch 5 to the port 3 of the bus switch 5. A meaning of a first row in Table 6 may be understood with reference to the meaning of the first row in Table 5. A second row in Table 6 indicates content of an advertisement packet received by the bus switch 5 from the port 1 of the bus switch 5, namely, content of a combined advertisement packet sent by the bus switch 1 to the port 2 of the bus switch 1 (namely, the content in Table 5). A third row in Table 6 indicates content of an advertisement packet received by the bus switch 5 from the port 2 of the bus switch 5, namely, content of a combined advertisement packet sent by the bus switch 2 to the port 2 of the bus switch 2 (which may be understood with reference to the content in Table 5). A fourth row in Table 6 indicates content of an advertisement packet received by the bus switch 5 from the port 5 of the bus switch 5, namely, content of a combined advertisement packet sent by the bus switch 3 to the port 4 of the bus switch 3 (which may be understood with reference to the content in Table 5). A fifth row in Table 6 indicates content of an advertisement packet received by the bus switch 5 from the port 4 of the bus switch 5, namely, content of a combined advertisement packet sent by the bus switch 4 to the port 4 of the bus switch 4 (which may be understood with reference to the content in Table 5).

**Table 6**

| Switch information field: device information of the bus switch 5 | Receiving port field: port 1, port 2, port 5, and port 4 | Sending port field: port 3 |
|---|---|---|
| Content of the advertisement packet received by the bus switch 5 from the port 1 of the bus switch 5 | | |
| Content of the advertisement packet received by the bus switch 5 from the port 2 of the bus switch 5 | | |
| Content of the advertisement packet received by the bus switch 5 from the port 5 of the bus switch 5 | | |
| Content of the advertisement packet received by the bus switch 5 from the port 4 of the bus switch 5 | | |

A quantity of advertisement packets combined in a single combined advertisement packet sent by the bus switch is not limited in this application, and an occasion at which the bus switch sends the combined advertisement packet is not limited either. For example, the bus switch may first determine a port of the bus switch connected to the bus terminal and a port of the bus switch connected to the bus switch. Then, after collecting advertisement packets of all connected bus terminals, the bus switch may combine the advertisement packets and separately forward a combined advertisement packet to ports of the bus switch connected to other bus switches. This helps the bus switch obtain the advertisement packets of the bus terminals in the bus network with a small latency. For a port connected to another bus switch, the bus switch may send the combined advertisement packet to the port after collecting and combining advertisement packets of all bus devices in the bus network. This helps reduce a quantity of times that the bus terminal receives the advertisement packet and reduce a load of the bus terminal.

The foregoing tables are merely examples, and the advertisement packet may not include one or more fields in the tables.

After the foregoing process of broadcasting the advertisement packet, information about all the bus devices in the bus domain may be synchronized to all devices. For example, in a small-scale secure and trusted environment (for example, a supercomputing scenario), all the bus devices may obtain information about other devices, including device types, address space, device capabilities, and the like. Optionally, in some scenarios (for example, a scenario in which secure isolation is required), the bus switch may determine a forwarding strategy based on a type of the bus device (referred to as a peer device) connected to the bus switch. For example, when the device type of the peer device includes the bus switch and/or the bus controller, the bus switch may forward, to the peer device, device information of another bus device received by the bus switch. When the device type of the peer device is the bus terminal, and the device type of the peer device does not include the bus switch and the bus controller, the bus switch may not forward, to the peer device, device information of another bus device received by the bus switch. This helps improve security of the device information on the basis of ensuring that the bus controller obtains the device information of all the bus devices in the bus network.

The bus controller may be determined through bootstrap election, or may be determined through designation (for example, a bus device with a specific type and/or a specific address is designated as the bus controller). After collecting all the device information, the bus controller may form a hierarchical bus topology information table, and allocate an address space range to each bus device.

As described above, after recording the forwarding path to the bus controller, the bus switching network may forward, based on the recorded forwarding path, the packet sent to the bus controller. The following describes several scenarios in which the bus switching network forwards the packet to the bus controller based on the forwarding path to the bus controller.

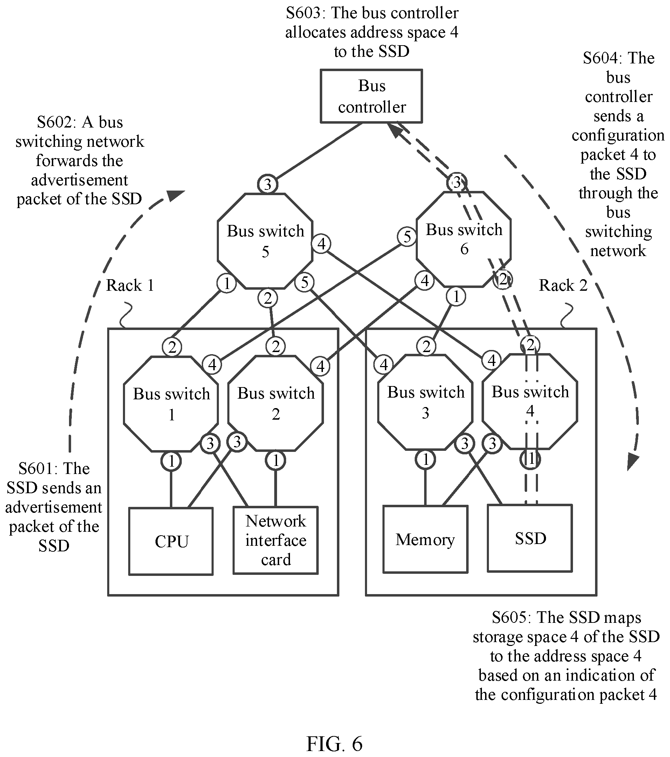

First, a scenario in which a bus device is newly added to the bus network is described. FIG. 6 illustrates a possible method procedure in this scenario. As shown in FIG. 6, the method procedure may include the S601 to S605.

S601: An SSD sends an advertisement packet of the SSD to a third port connected to the bus switching network, and correspondingly, the bus switching network receives the advertisement packet of the SSD from the third port, where the advertisement packet includes device information of the SSD.

S601 may be understood with reference to S301. For example, the CPU in S301 may be replaced with the SSD, and the second port may be replaced with the third port. As shown in FIG. 6, the third port includes the port 3 of the bus switch 3 and the port 1 of the bus switch 4. FIG. 6 illustrates a case in which the SSD sends the advertisement packet of the SSD to the port 1 of the bus switch 4. Optionally, the SSD may further send the packet of the SSD to the port 3 of the bus switch 3.

S602: The bus switching network forwards the advertisement packet of the SSD to the bus controller based on a forwarding path from the third port to the first port, and correspondingly, the bus controller receives the advertisement packet from the first port.

The foregoing describes the method for determining the forwarding path to the bus controller by the bus switching network. Details are not described herein again. The bus switching network may record one or more forwarding paths from the third port to the first port, and may separately forward the advertisement packet of the SSD based on all or a part of the forwarding paths. FIG. 6 illustrates a forwarding path from the port 1 of the bus switch 4 to the port 3 of the bus switch 6. As an example, the bus switching network may forward the advertisement packet of the SSD to the bus controller based on the forwarding path.

Optionally, the bus switch may add information about the forwarding path to the forwarded advertisement packet. The bus controller and/or the bus switching network may add information about the SSD to the network topology of the bus network based on the information about the forwarding path in the advertisement packet of the SSD, and add a node to an updated network topology at a position of the SSD (namely, a position for respectively connecting to the port 3 of the bus switch 3 and the port 1 of the bus switch 4). The node is the SSD.

S603: The bus controller allocates address space 4 to the SSD based on the device information of the SSD in the advertisement packet.

It is assumed that a vendor ID and a device ID of the SSD are D4 and V4 respectively, and address space allocated by the bus controller to the SSD is address space 4 in the global address space. A size of address space required by the SSD is not limited in this application.

S603 may be understood with reference to S303. For example, the CPU in S303 may be replaced with the SSD, the address space 1 may be replaced with the address space 4, and the identifier "CPU, D1, V1" of the CPU may be replaced with an identifier "SSD, D4, V4" of the SSD.

S604: The bus controller sends a configuration packet 4 to the SSD through the bus switching network, and correspondingly, the SSD receives the configuration packet 4 through the bus switching network, where the configuration packet 4 includes address information for describing the address space 4.

S604 may be understood with reference to S304. For example, the CPU in S304 may be replaced with the SSD, the address space 1 may be replaced with the address space 4, the identifier "CPU, D1, V1" of the CPU may be replaced with the identifier "SSD, D4, V4" of the SSD, and the configuration packet 1 may be replaced with the configuration packet 4.

With reference to the forwarding manner described in S304, the bus switching network may forward the configuration packet 4 based on all or a part of forwarding paths to the SSD. FIG. 6 illustrates a forwarding path from the port 3 of the bus switch 6 to the port 1 of the bus switch 4. As an example, the bus switching network may forward the configuration packet 4 to the SSD based on the forwarding path.

S605: The SSD maps storage space 4 of the SSD to the address space 4 based on an indication of the configuration packet 4.

With reference to the configuration manner described in S305, the SSD may configure configuration space of the SSD based on the indication of the configuration packet 4, for example, the SSD may map the storage space 4 of the SSD to the address space 4. This helps another bus device in the bus network directly address the storage space 4 of the SSD based on the address space 4, and read data from the storage space 4 and/or write data into the storage space 4.

Different from the method procedure described in FIG. 3, in the method procedure described in FIG. 6, after receiving an advertisement packet of the newly added bus device, the bus switching network may forward the advertisement packet based on the forwarding path to the bus controller. This helps save forwarding resources and improve security of the advertisement packet. The newly added bus device may be a bus device that is newly connected to the bus switching network after the forwarding path to the bus controller is recorded in the bus switching network, or may be a bus device that is newly connected to the bus switching network after the bus network is initialized. That the bus network is initialized may mean that the bus controller has experienced the preset duration after being started, or that the bus controller no longer receives the advertisement packet of the bus device within the preset duration. Before the bus network is initialized, the bus switching network may generally record the forwarding path to the bus controller.

Optionally, after receiving the advertisement packet of the newly added bus device, the bus switching network may forward the advertisement packet in the broadcast manner.

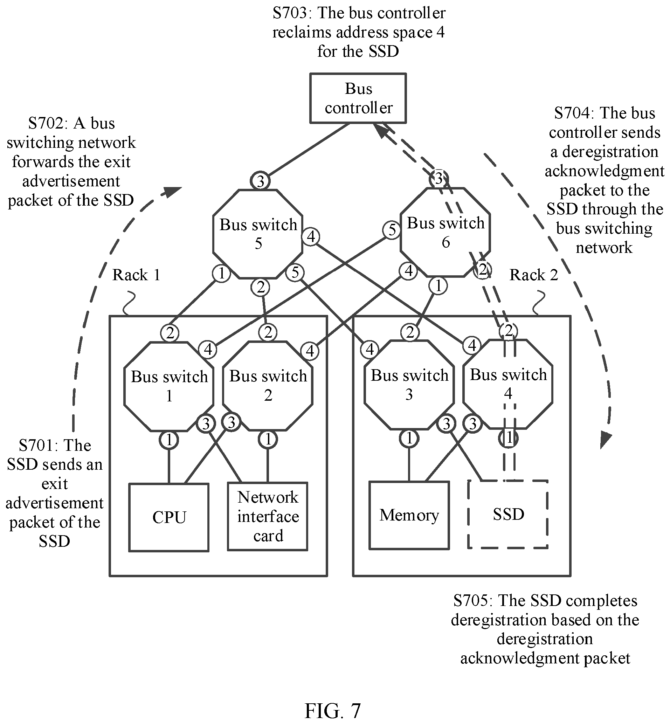

The following describes a scenario in which the bus device is deregistered from the bus network. FIG. 7 illustrates a possible method procedure in this scenario. As shown in FIG. 7, the method procedure may include the S701 to S705.

S701: The SSD sends an exit advertisement packet of the SSD to the third port, and correspondingly, the bus switching network receives the exit advertisement packet of the SSD from the third port, where the exit advertisement packet indicates that the SSD is to exit the bus network.

When the SSD is to exit the bus network, for example, when the SSD receives an exit instruction delivered by a user, the SSD may send the exit advertisement packet of the SSD to the connected third port of the bus switching network. Correspondingly, the bus switching network receives the exit advertisement packet of the SSD from the third port. The exit advertisement packet indicates that the SSD is to exit the bus network.

FIG. 7 illustrates a case in which the SSD sends the exit advertisement packet of the SSD to the port 1 of the bus switch 4. Optionally, the SSD may further send the exit advertisement packet of the SSD to the port 3 of the bus switch 3.

S702: The bus switching network forwards the exit advertisement packet of the SSD to the bus controller based on the forwarding path from the third port to the first port, and correspondingly, the bus controller receives the exit advertisement packet of the SSD from the first port.

The foregoing describes the method for determining the forwarding path to the bus controller by the bus switching network. Details are not described herein again. The bus switching network may record one or more forwarding paths from the third port to the first port, and may separately forward the exit advertisement packet of the SSD based on all or a part of the forwarding paths. FIG. 7 illustrates a forwarding path from the port 1 of the bus switch 4 to the port 3 of the bus switch 6. As an example, the bus switching network may forward the exit advertisement packet of the SSD to the bus controller based on the forwarding path.

S703: The bus controller reclaims, based on the exit advertisement packet of the SSD, the address space 4 allocated to the SSD.

After receiving the exit advertisement packet of the SSD, the bus controller may deregister the SSD based on the exit advertisement packet of the SSD. For example, the bus controller may reclaim the address space 4 allocated to the SSD, and/or, the bus controller may deregister or delete the information about the SSD in the network topology of the bus network, and an updated network topology indicates that a node position of the SSD is empty or that no bus device exists.

S704: The bus controller sends a deregistration acknowledgment packet to the SSD through the bus switching network, and correspondingly, the SSD receives the deregistration acknowledgment packet through the bus switching network, where the deregistration acknowledgment packet indicates that the bus controller has reclaimed the address space allocated to the SSD.

With reference to the forwarding manner described in S304, the bus switching network may forward the deregistration acknowledgment packet based on all or a part of the forwarding paths to the SSD. FIG. 7 illustrates a forwarding path from the port 3 of the bus switch 6 to the port 1 of the bus switch 4. As an example, the bus switching network may forward the deregistration acknowledgment packet to the SSD based on the forwarding path.

S705: The SSD completes deregistration based on the deregistration acknowledgment packet.

After receiving the deregistration acknowledgment packet, the SSD may determine that the bus controller successfully receives the exit advertisement packet of the SSD. Then, the SSD may continue to complete deregistration and be removed from the bus network. For example, the SSD may delete registration information such as the address space configured for the SSD, and/or separately disconnect from the port 3 of the bus switch 3 and the port 1 of the bus switch 4.

Optionally, after receiving the deregistration acknowledgment packet, the SSD may send a deregistration completion advertisement packet to the bus controller through the bus switching network, to notify the bus controller that the SSD has successfully received the deregistration acknowledgment packet and completed deregistration.

A type of the bus is not limited in this application. For example, the bus may be a PCIe bus. With development of public cloud services, capabilities of combining different types of resources are required. Therefore, the bus may alternatively be a CXL bus, an NVLink bus, or the like.

A quantity of bus devices in the bus network and types of the bus devices are not limited in this application. For example, the bus devices in the bus network may include at least one of a plurality of types, such as a CPU, a memory, a network interface card, an SSD, a graphics processing unit (graphics processing unit, GPU), a neural network processing unit (Neural network Processing Unit, NPU), a bus switch, and a field-programmable gate array (Field-Programmable Gate Array, FPGA). The bus switch mentioned in this application may be replaced with another type of bus device having a forwarding function.

The device advertisement information described above may be one or more advertisement packets or all or a part of information in one or more advertisement packets. Optionally, that the bus switching network forwards the advertisement packet actively sent by the bus device may mean that the bus switching network forwards a part of information (for example, the device information of the bus device) in the advertisement packet. The path information described above may include the information about the forwarding path described above.

For the foregoing method embodiments, it should be noted that:
(1) The step numbers of each flowchart described in embodiments are merely a procedure execution example, and do not constitute a limitation on a step execution sequence. In embodiments of this application, there is no strict execution sequence between steps having no time sequence dependence relationship with each other. In addition, not all steps shown in each flowchart are mandatory, and some steps may be added or deleted for each flowchart based on an actual requirement.
(2) In embodiments of this application, unless otherwise specified or there is a logic conflict, terms and/or descriptions in different embodiments are consistent and may be mutually referenced, and technical features in the different embodiments may be combined based on an internal logical relationship thereof, to form a new embodiment.

The method provided in embodiments of this application is described above in detail. The following describes in detail an apparatus and a chip system provided in embodiments of this application. It should be understood that descriptions of apparatus embodiments correspond to the descriptions of the method embodiments. Therefore, for content that is not described in detail, refer to the foregoing method embodiments. For brevity, details are not described herein.

The bus controller may be a bus device, or an apparatus deployed on a bus device. The foregoing method is mainly described from a perspective of interaction between the bus controller, the bus terminal, and the bus switch. It may be understood that, to implement the foregoing functions, any bus device includes a corresponding hardware structure and/or software module for implementing each function. To implement the functions in the foregoing embodiments, the bus controller, the bus terminal, and the bus switch each include a corresponding hardware structure and/or software module for implementing each function. A person skilled in the art should be easily aware that, in combination with the units and the method steps in the examples described in embodiments disclosed in this application, this application can be implemented by hardware or a combination of the hardware and computer software. Whether a function is performed by hardware or hardware driven by computer software depends on particular application scenarios and design constraints of the technical solutions.

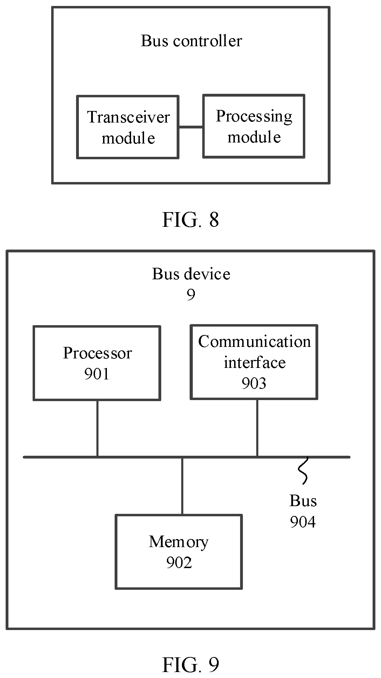

FIG. 8 is an example diagram of a structure of a bus controller according to this application. As shown in FIG. 8, the bus controller includes: a transceiver module, configured to receive an advertisement packet broadcasted by a bus switching network; and a processing module, configured to perform S303. The transceiver module is further configured to perform S304.

Optionally, the transceiver module is further configured to perform one or more steps in S306 to S311.

Optionally, the processing module is further configured to perform S603, and the transceiver module is further configured to perform S604.

Optionally, the processing module is further configured to perform S703, and the transceiver module is further configured to perform S704.

Both the transceiver module and the processing module may be implemented by using software, or may be implemented by using hardware. For example, the following uses the transceiver module as an example to describe an implementation of the transceiver module. Similarly, for an implementation of the processing module, refer to the implementation of the transceiver module.

A module is used as an example of a software functional unit, and the transceiver module may include code run on a compute instance. The compute instance may include at least one of a physical host (compute device), a virtual machine, and a container. Further, there may be one or more compute instances. For example, the transceiver module may include code run on a plurality of hosts/virtual machines/containers. It should be noted that the plurality of hosts/virtual machines/containers used for running the code may be distributed in a same region, or may be distributed in different regions. Further, the plurality of hosts/virtual machines/containers used for running the code may be distributed in a same availability zone, or may be distributed in different availability zones. Each availability zone includes one data center or a plurality of data centers that are geographically close to each other. Generally, one region may include a plurality of availability zones.

A module is used as an example of a hardware functional unit, and the transceiver module may include at least one compute device, for example, a server. Alternatively, the transceiver module may be a device implemented by an application-specific integrated circuit (application-specific integrated circuit, ASIC) or a programmable logic device (programmable logic device, PLD), or the like. The PLD may be a complex programmable logic device (complex programmable logic device, CPLD), a field-programmable gate array (field-programmable gate array, FPGA), generic array logic (generic array logic, GAL), or any combination thereof.

It should be noted that, in another embodiment, the transceiver module may be configured to perform any step in the method in embodiments of this application, and the processing module may be configured to perform any step in the method in embodiments of this application. The steps to be implemented by the transceiver module and the processing module may be specified as required. All functions of the bus controller are implemented by implementing different steps in the method in embodiments of this application by using the transceiver module and the processing module.

FIG. 9 is a diagram of a structure of a bus device according to an embodiment of this application. As shown in FIG. 9, the bus device 9 includes a processor 901, a memory 902, a communication interface 903, and a bus 904. The processor 901, the memory 902, and the communication interface 903 are coupled through the bus (not shown). The memory 902 stores instructions. When the execution instructions in the memory 902 are executed, the bus device 9 performs the method performed by the bus controller, the bus switch, or the bus terminal (for example, the CPU or the SSD) in the foregoing method embodiments.

The bus device 9 may be one or more integrated circuits configured to implement the foregoing method, for example, one or more application-specific integrated circuits (application-specific integrated circuits, ASICs), one or more microprocessors (digital signal processors, DSPs), one or more field programmable gate arrays (field programmable gate arrays, FPGAs), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For another example, these units may be integrated, and implemented in a form of a system-on-a-chip (system-on-a-chip, SOC).

The processor 901 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general purpose processor may be a microprocessor or any regular processor or the like.

The memory 902 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 902 stores executable program code, and the processor 901 executes the executable program code to separately implement functions in the method performed by the bus controller, the bus switch, or the bus terminal (for example, the CPU or the SSD), thereby implementing the foregoing bus technology-based device management method. In other words, the memory 902 stores instructions used to perform the foregoing management method.

The communication interface 903 uses a transceiver module, for example, but not limited to, a network interface card or a transceiver, to implement communication between the bus device 9 and another device.

In addition to a data bus, the bus 904 may further include a power bus, a control bus, a status signal bus, and the like. The bus may be a peripheral component interconnect express (peripheral component interconnect express, PCIe) bus, an extended industry standard architecture (extended industry standard architecture, EISA) bus, a unified bus (unified bus, Ubus, or UB), a compute express link (compute express link, CXL), a cache coherent interconnect for accelerators (cache coherent interconnect for accelerators, CCIX), or the like. Buses may be classified into an address bus, a data bus, a control bus, and the like.

It should be understood that a specific process in which the modules perform the foregoing corresponding steps has been described in detail in the foregoing method embodiments. For brevity, details are not described herein again.

An embodiment of this application further provides a computer-readable storage medium. The computer-readable storage medium stores computer instructions used to implement the method performed by the bus controller, the bus switch, or the bus terminal (for example, the CPU or the SSD) in the foregoing method embodiments. For example, when the computer program is executed by a computer, the computer can implement the method performed by the corresponding device in the foregoing method embodiments.

An embodiment of this application further provides a computer program product, including instructions. When the instructions are executed by a computer, the method performed by the bus controller, the bus switch, or the bus terminal (for example, the CPU or the SSD) in the foregoing method embodiments is implemented.

For explanations and beneficial effects of related content of any one of the apparatuses provided above, refer to the corresponding method embodiments provided above. Details are not described herein again.

In the several embodiments provided in this application, it should be understood that the disclosed apparatus and methods may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A bus technology-based device management method, wherein the method is applied to a bus controller, the bus controller runs in a bus network, the bus network comprises a plurality of bus devices interconnected through a bus, and the method comprises:
receiving device advertisement information, wherein the device advertisement information comprises device information of the first bus device, and the device information of the first bus device is actively sent by the first bus device to the bus controller after the first bus device is powered on;
allocating address space of the bus to the first bus device based on the device information of the first bus device; and
sending configuration information to the first bus device, wherein the configuration information comprises address information for describing the address space.

2. The method according to claim 1, wherein the device information of the first bus device is forwarded by one or more bus devices in the bus network to the bus controller after being sent from the first bus device.

3. The method according to claim 2, wherein the device advertisement information further comprises path information, the path information comprises information indicating that the device information of the first bus device is forwarded by the one or more bus devices, and the method further comprises:
determining, based on the path information, a forwarding path of the device advertisement information between the first bus device and the bus controller.

4. The method according to claim 3, wherein when the device information of the first bus device is forwarded by the plurality of bus devices in the bus network to the bus controller, receiving the device advertisement information comprises:
separately receiving a plurality of pieces of device advertisement information, wherein the device information of the first bus device in the plurality of pieces of device advertisement information is forwarded through different forwarding paths; and
determining a plurality of forwarding paths based on path information in each of the plurality of pieces of device advertisement information.

5. The method according to claim 4, wherein sending the configuration information to the first bus device comprises:
determining a target forwarding path based on the plurality of forwarding paths, and sending the configuration information to the first bus device through the target forwarding path.

6. The method according to any one of claims 2 to 5, wherein the method further comprises:
sending device information of the bus controller to at least one bus device connected to the bus controller, wherein the device information of the bus controller indicates the at least one bus device to record information about a port for connecting to the bus controller.

7. The method according to claim 6, wherein the method further comprises:
receiving device information of a second bus device in the bus network, wherein the device information of the second bus device is actively sent by the second bus device to the bus controller after the second bus device is powered on, and the device information of the second bus device is forwarded by the at least one bus device based on the information about the port of the bus controller.

8. The method according to claim 6 or 7, wherein the method further comprises:
receiving status advertisement information of the first bus device, wherein the status advertisement information of the first bus device indicates that the first bus device is to exit the bus network or is still connected to the bus network, and the status advertisement information of the first bus device is forwarded by the at least one bus device based on the recorded information about the port connected to the bus controller; and
determining a connection status of the first bus device in the bus network based on the status advertisement information of the first bus device.

9. The method according to any one of claims 2 to 8, wherein a device type of the bus device that forwards the device information of the first bus device in the bus network comprises a bus switch.

10. The method according to any one of claims 1 to 9, wherein the device information of the first bus device comprises an identifier of the first bus device, and the identifier of the first bus device comprises at least one of a device type of the first bus device, a vendor identifier of the first bus device, and a device identifier of the first bus device.

11. The method according to any one of claims 1 to 10, wherein the device information of the first bus device comprises a size of address space required by the first bus device.

12. The method according to any one of claims 1 to 11, wherein the plurality of bus devices are disposed in at least two computer devices.

13. A bus technology-based device management method, wherein a bus network comprises a plurality of bus devices interconnected through a bus, a bus controller runs in the bus network, and the method comprises:
after being powered on, actively sending, by a first bus device in the bus network, device information of the first bus device;
receiving, by the bus controller, device advertisement information, wherein the device advertisement information comprises the device information of the first bus device;
allocating, by the bus controller, address space of the bus to the first bus device based on the device information of the first bus device, and sending configuration information to the first bus device, wherein the configuration information comprises address information for describing the address space; and
receiving, by the first bus device, the configuration information, and mapping, based on an indication of the configuration information, all or a part of storage space of the first bus device to the address space described by the address information.

14. The method according to claim 13, wherein the device information of the first bus device is forwarded by one or more bus devices in the bus network to the bus controller after being sent from the first bus device.

15. The method according to claim 14, wherein the method further comprises:
after receiving the device information of the first bus device, forwarding, by a bus device connected to the first bus device in the bus network, the device information of the first bus device and path information, wherein the path information comprises information indicating that the device information of the first bus device is forwarded by the one or more bus devices.

16. The method according to claim 14 or 15, wherein the method further comprises:
after receiving the device information of the first bus device, forwarding, by the bus device connected to the first bus device in the bus network, the device information of the first bus device in a broadcast manner.

17. The method according to any one of claims 14 to 16, wherein the method further comprises:
sending, by the bus controller, device information of the bus controller to at least one bus device connected to the bus controller; and
recording, by the at least one bus device based on an indication of the device information of the bus controller, information about a port for connecting to the bus controller.

18. The method according to claim 17, wherein the method further comprises:
after being powered on, actively sending, by a second bus device in the bus network, device information of the second bus device to the bus controller;
forwarding, by the at least one bus device, the device information of the second bus device to the bus controller based on the information about the port of the bus controller; and
receiving, by the bus controller, the device information of the second bus device.

19. The method according to claim 17 or 18, wherein the method further comprises:
sending, by the first bus device, status advertisement information of the first bus device to the bus controller, wherein the status advertisement information indicates that the first bus device is to exit the bus network or is still connected to the bus network;
forwarding, by the at least one bus device, the status advertisement information to the bus controller based on the information about the port of the bus controller; and
receiving, by the bus controller, the status advertisement information, and determining a connection status of the first bus device in the bus network based on the status advertisement information.

20. A bus controller, wherein the bus controller runs in a bus network, the bus network comprises a plurality of bus devices interconnected through a bus, and the bus controller comprises:
a transceiver module, configured to receive device advertisement information, wherein the device advertisement information comprises device information of the first bus device, and the device information of the first bus device is actively sent by the first bus device to the bus controller after the first bus device is powered on; and
a processing module, configured to allocate address space of the bus to the first bus device based on the device information of the first bus device, wherein
the transceiver module is further configured to send configuration information to the first bus device, wherein the configuration information comprises address information for describing the address space.

21. A bus device, wherein the bus device comprises a processor and a bus interface, and the processor is configured to perform the method according to any one of claims 1 to 12 based on instructions stored in a memory.

22. A compute device cluster, wherein the compute device cluster comprises at least one compute device, each of the at least one compute device comprises one or more bus devices, and the one or more bus devices are connected to the bus device according to claim 21.

23. A bus network, wherein the bus network comprises a plurality of bus devices interconnected through a bus, a bus controller runs in the bus network, and the bus controller is configured to perform the method according to any one of claims 1 to 12.

24. A computer program product, comprising computer-readable instructions, wherein when the computer-readable instructions are run on a computer, the computer is caused to perform the method according to any one of claims 1 to 12.

25. A computer-readable storage medium, wherein the computer-readable storage medium stores instructions, and when the instructions are run on a computer, the computer is caused to perform the method according to any one of claims 1 to 12.
